# EUROPEAN PATENT APPLICATION

(11) **EP 3 643 496 A1**
(43) Date of publication of application: **29.04.2020**
(21) Application number: 18201832.5
(22) Date of filing: 22.10.2018
(51) Int. Cl.: B32B 15/06, B32B 25/14, B32B 27/20, B32B 27/30, B32B 27/32, B32B 27/36, B32B 27/40, B32B 25/08

(54) **MULTILAYERED PATCHES FOR SEALING APPLICATIONS AND RELATED METHODS**

(71) Applicant: NITTO BELGIUM N.V, 3600 Genk (BE)
(72) Inventor: OOSTERBAAN, Wibren Duco, 3600 Genk (BE); WOUTERS, Jimmy, 3600 Genk (BE)
(74) Representative: Grünecker Patent- und Rechtsanwälte PartG mbB

(57) **Abstract**

This invention relates to a multilayered patch, comprising: a first layer, and a pressure-sensitive adhesive layer comprising a mixture of: a styrene-based triblock copolymer, a styrene-based diblock copolymer, and at least one hydrocarbon resin selected from the group of aromatic modified aliphatic hydrocarbon resins, partially hydrogenated resins, and fully hydrogenated resins; wherein the first layer comprises a metal or a metal alloy, or wherein the first layer comprises a polymer and has a strain at break according to ASTM D638 of at least 10%. The multilayered patch exhibits favourable properties as sealing material for vehicle body holes against ingression of noise, moisture and/or dirt. Also described are methods of sealing and methods of manufacturing the multilayered patch.

## Description

### FIELD OF INVENTION

This invention relates to a pressure-sensitive adhesive multilayered patch, which may be effectively used for sealing openings in sheet material (e.g. metal, plastic or composite sheets) against ingression of noise, moisture and/or dirt, for example in automotive applications.

In further aspects, the present invention relates to methods of sealing of automotive body holes by using the multilayered patch and to methods of manufacturing the same.

### BACKGROUND OF THE INVENTION

In automotive production processes, particularly in the assembly and processing of autobodies, a large number and variety of openings in car body parts are required for fixation of body components, to provide access to car body cavities, to facilitate painting and waxing steps and/or for anti-corrosion purposes.

To avoid ingression of dirt and moisture and thereby prevent corrosion throughout the vehicle lifetime, and in order to decrease the noise level within the vehicle to acceptable levels, the openings must be closed in the further production process by hole covering means.

In general, hole covers should ideally secure permanent sealing against humidity and dirt, and exhibit favourable sound blocking properties, excellent chemical resistance, temperature resistance, and mechanical properties (i.e. ability to withstand mechanical impacts and a high flexibility to enable application on uneven surfaces). Furthermore, since a typical autobody may comprise about 50 to 90 holes and openings or even more, the cover in general should not have more mass than needed to fulfill the main function it should provide, in order to avoid excessive contribution to vehicle weight. In addition, it would be desirable to provide a hole cover, which may be produced in a simple, inexpensive and environment-friendly manner and which enables easy manual or automated application (e.g. by robots).

Vehicle opening covers known in the art do not satisfy all of these criteria.

For instance, it is known to use injection-molded polymer-based plugs which are pushed into the openings to cover the same. However, such plugs tend to be difficult to apply and must be specifically manufactured to fit the shape and size of each hole and also maintain a high dimensional stability under temperature variations in order to effectively avoid ingress of humidity, liquids and air.

Adhesive hole covers have been proposed as an easier-to-produce and more versatile alternative to plastic plugs.

For example, WO 2006/053827 A1 discloses stamped products comprising a base layer comprising a heat-activatable foamable material and an adhesive composition applied thereon. The base layer is foamed by heating, e.g. during paint curing. However, beside of the relatively high manufacturing costs of such cover materials, foamed materials tend to be prone to shrinkage upon heat exposure, which may cause a complete loss of the sound absorbing and moisture blocking functions, or tend to degrade over time and to absorb moisture, so that they are not suitable to effectively prevent corrosion. In addition, foamed materials in general are less effective in blocking sound than dedicated high density sound damping materials per unit of volume.

US 2016/0271866 A1 discloses diecuts for the permanent closing of vehicle body holes which comprise a carrier comprising a laminate of at least two polymeric films, wherein the at least two polymeric films comprise a lower film and an upper film, wherein the lower film has a basis weight of at least 1.5 kg/m² and a side of the lower film located opposite with respect to the upper film bears an applied adhesive selected from silicone- or acrylate-based self-adhesives or heat-curable adhesives, such as combinations of polyamides and epoxy resins, for examples. Self-adhesives are typically prepared in a separate production step and laminated onto the carrier film. It is often observed that self-adhesive compositions, such as acrylates, exhibit a poor compatibility with materials typically employed as carriers, which may result in delamination of the adhesive layer. Moreover, adjusting the adhesive properties of self-adhesive composition for optimized handling (e.g. easy reposition directly after application without leaving residues, combined with build-up of strong adhesion) is challenging. On the other hand, the use of heat-curable adhesives either requires additional heating steps or requires the hole cover to be applied before drying of the paint finish.

In addition, poor recyclability of adhesive hole covers known in the art represents a major problem, especially in case of die-cut covers, since cutting circular patches out of a material which is usually provided in a rectangular sheet form results in significant amount of waste during production. For example, when cutting 30 mm circular patches on a roll with a distance of 5 mm between the patches and 2.5 mm at the sides, over 42% of the sheet surface is discarded as waste. Thus, it would be especially desirable to introduce recyclable materials to lower the costs of hole cover production and alleviate its environmental burden.

WO 2017/045765 A1 discloses an environment-friendly pressure-sensitive adhesive composition for industrial and household applications, the composition comprising a mixture of: (a) a styrene-butadiene-styrene triblock copolymer, (b) a styrene-butadiene diblock copolymer, and (c) an aromatic modified aliphatic hydrocarbon resin; wherein the content of component (c) in the mixture is in the range of from 10 to 45 wt.-% relative to the total weight of the mixture. However, the preparation of a multilayered patch which satisfies the above-defined desirable features is not addressed.

Therefore, it remains desirable to provide an adhesive hole cover, which enables permanent sealing, exhibits favourable damping properties, excellent chemical resistance, temperature resistance, and mechanical properties, and which may be produced in a simple, inexpensive and environment-friendly manner.

Furthermore, providing an improved method for manufacturing such adhesive hole covers remains desirable.

### SUMMARY OF THE INVENTION

The present invention solves this object with the subject matter of the claims as defined herein. The advantages of the present invention will be further explained in detail in the section below and further advantages will become apparent to the skilled artisan upon consideration of the invention disclosure.

Generally speaking, in one aspect the present invention provides a multilayered patch, comprising: a first layer, and a pressure-sensitive adhesive layer comprising a mixture of: a styrene-based triblock copolymer, a styrene-based diblock copolymer, and at least one hydrocarbon resin selected from the group of aromatic modified aliphatic hydrocarbon resins, partially hydrogenated resins, and fully hydrogenated resins; wherein the first layer is composed of a metal or alloy, or wherein the first layer comprises a polymer and has a strain at break according to ASTM D638 of at least 10%. The multilayered patch may further comprise a second layer between the first layer and the pressure-sensitive adhesive layer.

In another aspect, the present invention describes a method of sealing one or more automotive body hole(s) against ingression of noise, moisture and/or dirt, the method comprising applying the aforementioned multilayered patch over the one or more automotive body hole(s).

In a further aspect, the present invention relates to a method of manufacturing the aforementioned multilayered patch, comprising extrusion-coating the extruded pressure-sensitive adhesive composition onto a film comprising the first layer and the optional second layer to produce the multilayered patch; or extruding the pressure-sensitive composition, forming a film of the extruded pressure-sensitive composition, and laminating the film over the first layer or, if present, the optional second layer to produce the multilayered patch.

### BRIEF DESCRIPTION OF THE DRAWINGS

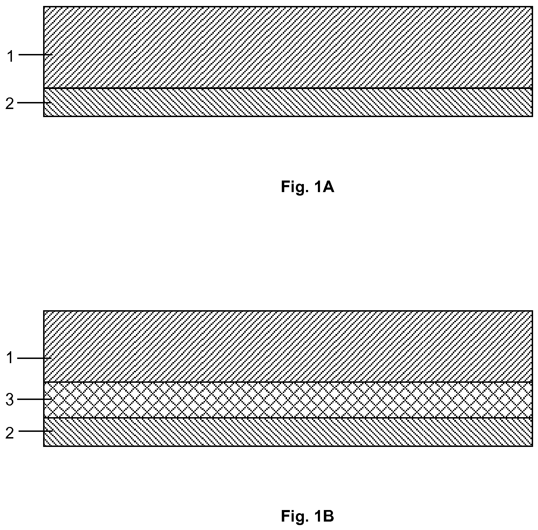

FIG. 1A is a schematic representation of a double-layer patch according to the present invention.
FIG. 1B is a schematic representation of a triple-layer patch according to the present invention.

### DETAILED DESCRIPTION OF THE INVENTION

For a more complete understanding of the present invention, reference is now made to the following description of the illustrative embodiments thereof:

### Multilayered Patch

In a first embodiment, the present invention generally relates to a multilayered patch, comprising: a first layer, and a pressure-sensitive adhesive (PSA) layer comprising a mixture of: a styrene-based triblock copolymer, a styrene-based diblock copolymer, and a hydrocarbon resin selected from one or more aromatic modified aliphatic hydrocarbon resins and partially or fully hydrogenated resins; wherein the first layer is composed of a metal or alloy, or wherein the first layer comprises a polymer and has a strain at break according to ASTM D638 of at least 10%.

In order to provide for a sufficient sound and vibration damping function, the multilayer patch preferably exhibits a total basis weight of 0.4 to 5 kg/m², more preferably between 1.4 to 3.8 kg/m², which may be suitably adjusted by selecting the thickness and the material of each of the layers. In further preferred embodiments, the basis weight of the first layer is within the range of 0.05 to 4.95 kg/m², especially preferably 0.2 to 4 kg/m², such as from 0.4 to 3.5 kg/m² or from 0.6 to 3 kg/m². The basis weight of the adhesive layer is preferably in the range of 0.05 to 0.5 kg/m², such as 0.1 to 0.4 kg/m².

The first layer may be composed of a corrosion-resistant metal or metal alloy (including aluminum or stainless steel, for example), which is typically laminated onto the first layer or a layer interposed between the first layer and the PSA layer. Advantageously, by appropriately selecting the first layer thickness, such a configuration enables manufacture of light-weight hole covers with excellent mechanical properties (e.g. toughness and tear resistance). Also, the pressure-sensitive adhesive layer employed ensures a particularly high bonding strength to the metal-based surface of the first layer material. Specifically, the PSA layer generally exhibits a low initial tack, allowing the patch to be easily repositioned directly after application without leaving residues, but builds-up strong adhesion quickly, so that a firm bonding between a first layer composed of a metal or metal alloy and the rim of a hole opening may be established.

Alternatively, if the first layer comprises a polymer, it preferably exhibits a strain at break according to ASTM D638 of more than 20%, further preferably more than 100%; in embodiments more than 200% or more than 500% and less than 2000% or less than 1500%. Independently or in combination therewith, the first layer preferably exhibits a tear strength of at least 3 N/mm², preferably at least 5 N/mm², which may be determined by the procedures of ASTM D624.

While the polymer in the first layer is not particularly limited as long as the first layer exhibits a strain at break according to the above description and may contain one or more polymeric materials (such as PVC, PP, PET, or PU, for example), it is preferably a thermoplastic elastomer, which ensures an excellent compatibility with the pressure-sensitive adhesive layer and thereby reduces delamination issues, and combines a high density with good flexibility. Moreover, by using said configuration, both the first layer and the pressure-sensitive adhesive layer may be extruded by using the same equipment, which reduces the manufacturing costs, and may be fully recycled in a simple manner.

The thermoplastic elastomer may be selected from a copolymer or a physical mixture of polymers having both thermoplastic and elastomeric properties. The specific choice of thermoplastic and elastomeric materials is not particularly limited and may be suitably selected by the skilled artisan depending on the required flexibility and temperature stability. A suitable choice of materials includes thermoplastic elastomers based on copolyamides, polyester elastomers or copolyesters, urethanes, styrene block copolymers (e.g. SBS, SEBS, SEPS, MBS, SEEPS), olefin-based thermoplastic elastomers (e.g. PP/EPDM), and cross-linked olefin-based thermoplastic elastomers.

In a preferred embodiment, the first layer comprises a styrene block copolymer selected from one or more of styrene-butadiene-styrene (SBS), styrene-ethylene/butylene-styrene (SEBS), styrene-ethylene/propylene-styrene (SEPS) or styrene-isoprene-styrene (SIS), which may be selected independently from the styrene-based triblock copolymer in the pressure-sensitive adhesive layer. SEBS is particularly preferred as it combines excellent mechanical properties with especially high temperature resistance. If present, the styrene block copolymer is used in a content of between 5 and 40% by weight, further preferably at a content of from 10 to 30% by weight, based on of the total weight of the first layer.

Independently or in combination, the first layer preferably comprises an elastomer. As a preferred example thereof, polypropylene-based elastomers may be mentioned, such as polypropylene-based elastomers comprising ethylene. Specifically preferred are polypropylene-based elastomers with randomly distributed ethylene content of 5 to 20% by weight, further preferably 10 to 18% by weight, based on the total weight of the elastomer. For improved elasticity, toughness and impact performance, the elastomer content in the first layer is preferably in the range of 3 to 30% by weight, further preferably 5 to 20% by weight, based on the total weight of the first layer.

In a preferred embodiment from the viewpoint of cost effectivity and mechanical properties (especially shear performance), the first layer further comprises a filler. While the filler material is not particularly limited, preferred filler materials include any of chalk, alumina, alumina gel, boehmite, pseudoboehmite, iron oxides (e.g. magnetite Fe₃O₄), calcium carbonate, magnesium carbonate, pyrophyllite, zeolite, talc, silica, silica gel, synthetic calcium silicates, anhydrous silicic acid powder, aluminum hydroxide, barite, barium sulfate, gypsum, or calcium sulfate. Further preferably, the filler is selected from any of barium sulfate, chalk, talc, silica or iron oxides. In the first layer, the filler is preferably employed in a content of 5 to 90 wt.-%, further preferably at least 50 wt.-%, more preferably 50 to 90 wt.-%, and even more preferably 65 to 85 wt.-%, relative to the total weight of the first layer.

Optionally, the first layer further comprises an optional coloring agent (including, but not limited to carbon black and inorganic pigments selected from metal oxides, sulfides and/or hydroxides) in a content of 0 to 5% by weight, typically in a content of 0.5 to 2% by weight, relative to the total weight of the first layer.

The first layer may comprise further additives selected from one or more of stabilizing agents, anti-odor agents, flame retardants, extrusion enhancers, structural fillers (e.g. carbon nanotubes, glass fibers, and/or aramid fibers) and antioxidants.

The thickness of the first layer may be suitably selected depending on the material and the desired mechanical properties of the multilayer patch (e.g., flexibility, toughness, sound and vibration damping properties). When using metals or alloys as first layer material, the thicknesses will typically range from 30 to 500 µm, whereas, when using polymer-based first layers, first layer thicknesses in the range of 50 µm to 5 mm will be usually selected.

Preferred embodiments of the pressure-sensitive adhesive layer will be described in the following.

The styrene-based triblock copolymer is preferably selected from styrene-butadiene-styrene (SBS), styrene-ethylene/butylene-styrene (SEBS), styrene-ethylene/propylene-styrene (SEPS) or styrene-isoprene-styrene (SIS). That is, the styrene-based triblock copolymer is preferably a linear or radial A-B-A block copolymer of the type which comprises an elastomeric B-block (center block) derived from butadiene, derived from ethylene, derived from a copolymer of ethylene and butylene, derived from a copolymer of ethylene and propylene; or derived from isoprene, either alone or in conjunction with a small proportion of other monomers; and thermoplastic A-blocks (end blocks) derived from styrene, i.e., polymerized from styrene or styrene homologues. The presence of styrene-based triblock copolymer is required to provide PSA tapes with a sufficiently low creep rate. From the viewpoint of cost-effectivity, the use of styrene-butadiene-styrene (SBS) triblock copolymers may be preferred. However, poly(styrene-b-(ethylene-butylene)-b-styrene) block copolymer (SEBS) may be preferred if excellent heat, UV and aging resistance is required (for example, if the patch is provided on the autobody holes before the autobody is being subjected to high-temperature processing steps) or in view of its excellent oil absorption and favourable balance of strength and toughness.

The individual styrene blocks preferably constitute 5-50 wt.-%, more preferably 20 to 40 wt.-% of the triblock copolymer. Preferably, the styrene-based triblock copolymer exhibits a linear structure. The weight-average molecular weight of the styrene-based triblock copolymer is preferably in the range of from 10,000 to 500,000 and/or higher than that of the styrene-based diblock copolymer. It is noted that the styrene-based triblock copolymer may comprise a mixture of two or more styrene-based triblock copolymers.

The styrene-based diblock copolymer is preferably a styrene-butadiene diblock copolymer, which may be a radial or linear A-B block copolymer of the type which comprises an elastomeric B-block derived from butadiene, i.e., polymerized from butadiene, either alone or in conjunction with a small proportion of other monomers, or derived from a copolymer of ethylene and butylene; and a thermoplastic A-block derived from styrene, i.e., polymerized from styrene or styrene homologues. It is noted that the A- and B-blocks present in each of the styrene-based triblock copolymer and the styrene-based diblock copolymer may be identical or different. The presence of styrene-based diblock copolymers ensures a sufficient adhesion on a wide range of surfaces, i.e. oily BA steel surfaces. The individual styrene blocks in styrene-based diblock copolymer preferably constitute 5-50 wt.-%, more preferably 20 to 40 wt.-% of the diblock copolymer. Preferably, the styrene-butadiene diblock copolymer exhibits a radial structure. The weight-average molecular weight of the styrene-based diblock copolymer is preferably in the range of from 1,000 to 50,000 and/or higher than that of the styrene-based triblock copolymer used as component. In a further preferred embodiment, the styrene-based diblock copolymer has a toluene solution viscosity (5.23 %) of more than 15 cSt, as measured according to MA 04-3-003 Standard. It is noted that the styrene-based diblock copolymer may comprise a mixture of two or more styrene-based diblock copolymers according to the aforementioned definitions.

The hydrocarbon resin is selected from at least one in the group of aromatic modified aliphatic hydrocarbon resins, partially hydrogenated resins, and fully hydrogenated resins. In preferred embodiments, the hydrocarbon resin(s) exhibit(s) a glass transition temperature in the range of from 25 to 80°C, more preferably in the range of from 30 to 55°C (as may be determined by differential scanning calorimetry). The aromatic modified aliphatic hydrocarbon resin is not particularly limited as long as it is aromatically modified and exhibits sufficient compatibility with the styrene-based triblock copolymer. The hydrocarbon resin may be a C5, a C5/C9 or a C9 hydrocarbon resin. The aromatic modified aliphatic hydrocarbon resin preferably exhibits a ring and ball softening point in the range of 80 to 105°C, more preferably in the range of 85 to 102°C (as determined by ASTM E 28). Preferable aromatic modified aliphatic hydrocarbon resins in terms of the tape creep performance have a melt viscosity of less than 840 mPa·s at 160°C, more preferably a melt viscosity at 160°C in the range of from 450 to 840 mPa·s, which may be determined in accordance with ASTM D 3236. Examples of partially or fully hydrogenated resins include, but are not limited to thermoplastic resins derived from petrochemical feedstocks. While not being limited thereto, examples of fully hydrogenated resins exhibit a melt viscosity in the range of from 100 to 600 mPa·s at 160°C, whereas preferred partially hydrogenated resins may exhibit a melt viscosity of from 100 to 9000 mPa·s at 160°C (determined in accordance with ASTM D 3236). It is understood that two or more different hydrocarbon resins according to the definitions above may be employed in combination. Especially preferred combinations include two different partially or fully hydrogenated resins having different melt viscosity ranges (at 160°C) and/or glass transition temperatures.

In order to ensure sufficient adhesion properties, the content of the hydrocarbon resin in the mixture is preferably between 10 wt.-% and 45 wt.-%, more preferably between 20 and 40 wt.-%, and further preferably between 25 wt.-% and 38 wt.-%, each relative to the total weight of the mixture.

In general, the weight ratio of styrene-based triblock and styrene-based diblock copolymers in the mixture is preferably in the range of from 1:99 to 99:1. In order to obtain a favourable balance of adhesion properties and creep performance, the ratio of styrene-based triblock and styrene-based diblock copolymers in the mixture is preferably in the range of from 10:90 to 90:10, more preferably from 20:80 to 80:20, even more preferably 30:70 to 70:30 by weight.

The total content of styrene-based triblock and styrene-based diblock copolymers in the mixture is preferably in the range of from 10 wt.-% to 70 wt.-%, even more preferably from 20 wt.-% to 65 wt.-%, further preferably from 30 wt.-% to 60 wt.-%, such as from 40 to 50 wt.-%, each relative to the total weight of the mixture.

The mixture comprised in the pressure-sensitive adhesive layer may further contain an endblock reinforcing resin in combination with the hydrocarbon resin. While not being limited thereto, such endblock reinforcing resins may include thermoplastic resins made from purified aromatic hydrocarbon monomers and ideally exhibit a ring and ball softening point determined according to ASTM E 28 of 120°C or higher, preferably 135°C or higher, more preferably higher than 145 °C. The content of endblock reinforcing resin is preferably in the range of 0 to 20 wt.-%, more preferably 1 to 15 wt.-%, further preferably between 3 to 8 wt.-% based on the total weight of the mixture. In an especially preferred embodiment, the total content of endblock reinforcing resin and the hydrocarbon resin is between 10 and 45 wt.-% relative to the total weight of the mixture.

In a preferred embodiment from the viewpoint of cost effectivity and mechanical properties (especially shear performance), the mixture further comprises a filler selected from the above-listed filler materials for the first layer. In the pressure-sensitive adhesive layer, the filler is preferably employed in a content of 0 to 50 wt.-%, further preferably 5 to 40 wt.-%, more preferably 10 to 38 wt.-% relative to the total weight of the mixture.

In a further preferred embodiment, the mixture further comprises a thixotropic agent, the content of the thixotropic agent in the mixture being preferably in the range of from 0.1 wt.-% to 25 wt.-%, more preferably in the range of from 1 to 18 wt.-% relative to the total weight of the mixture. As examples, montmorillonite, kaolinite, illite, bentonite, halloysite, hectorite clays and modified forms thereof may be specifically mentioned.

The pressure-sensitive adhesive layer may optionally further contain additives conventionally used in the art, such as e.g. anti-aging agents, antioxidants, softeners, UV-absorbers, surfactants, antistatic agents, and/or coloring agents (e.g. carbon black).

In contrast to acrylate-based adhesive layers, the pressure-sensitive adhesive layer used in the present invention may be easily manufactured by processing methods specifically suitable for solid or highly viscous materials, such as extrusion processes, so that the addition of liquid components or plasticizers for the purpose of lowering the viscosity and improving the processability in batch mixing methods, for example, is not required. In forgoing substances that are liquid under processing conditions, the manufacture of pressure-sensitive adhesive layers by extrusion, for example, may be simplified. Hence, the amount of volatile components which may cause high total carbon emissions under elevated temperature environments may be effectively kept at a minimum. These benefits are not only important in industrial automotive applications, wherein car interior materials have to fulfill strict standards in terms of carbon or VOC emission (e.g. VDA 277 testing setting the maximum carbon emission to ≤ 50 µg C/ g), fogging (FOG emission) and odor emission, but of course also under environmental aspects in general.

It is therefore preferable that the multilayered patch in accordance with the present invention does not comprise a plasticizer in a content of 2 wt.-% or more relative to the total weight of the multilayered patch, wherein plasticizers may include hydrocarbon oil components (such as aliphatic/paraffinic components, aromatic components and naphthenic components, as well as mixtures thereof), adipic ester plasticizers, as well as plasticizers selected among propylene oligomers, butene oligomers, isoprene oligomers, hydrogenated isoprene oligomers, butadiene oligomers, benzoic esters and vegetable and animal oils and derivatives thereof, for example. More preferably, the multilayered patch does not comprise a plasticizer at all. Apart from the abovementioned environmental advantages, avoiding the use of plasticizers advantageously affects the creep rate, shear properties and adhesion on oily surfaces of the pressure-sensitive adhesive layer.

The thickness of the PSA layer may be suitably selected by the skilled artisan, and preferably ranges from 50 to 500 µm, such as 100 to 300 µm, for example.

As is shown in Fig. 1A, the multilayer patch of the present invention may consist of the first layer (1) and the pressure-sensitive adhesive layer (2), optionally with a release liner being provided on at least a part of the surface of the pressure-sensitive adhesive layer (2) (not shown). Alternatively, one or more additional layers may be provided between the first layer (1) and the pressure-sensitive adhesive layer (2) or on the surface of the first layer (1) opposed to the pressure-sensitive adhesive layer (2) side, optionally with a release liner being provided on at least a part of the surface of the pressure-sensitive adhesive layer (2) (not shown). Generally, the optional release liner may be composed of materials known in the art, which may be suitably selected by the skilled artisan. Exemplary intermediate layers may be composed of structural damping material (which may include a viscoelastic material, preferably a rubber, more preferably butyl rubber, or a bitumen based material, preferably asphalt). Layers applied on the surface of the first layer (1) opposed to the pressure-sensitive adhesive layer (2) side may include anti-corrosion coating layers, for example.

In a preferred embodiment, the multilayer patch of the present invention comprises a second layer (3) between and in contact with the first layer (1) and the pressure-sensitive adhesive layer (2) (see Fig. 1B).

If present, the basis weight of the second layer is preferably less than 1.5 kg/m², further preferably within the range of 0.3 to 1.45 kg/m², especially preferably 0.5 to 1.4 kg/m².

In preferred embodiments of the present invention, reinforcing fibers or an open reinforcing woven or non-woven material (organic or inorganic) may be introduced or laminated to one or more layers of the patch for reinforcement (e.g., in order to withstand particularly high water pressure) and for prevention of damage (e.g. by stone chippings). For this purpose, reinforcing fibers or an open reinforcing woven or non-woven material are preferably incorporated in the first or the optional second layer, especially preferably in the first layer if a polymer-based layer is used as the first layer. Alternatively, the reinforcing material may be positioned between the first layer and the adhesive layer, between the first layer and the optional second layer, or between the optional second layer and the pressure-sensitive adhesive layer. The reinforcing material is not particularly limited as long as it is compatible with the material of the layer into which it is introduced and does not significantly absorb moisture or cause delamination or cracks in the patch over prolonged periods. Examples of reinforcing materials include attached and/or integrated fibers or filaments, preferably continuous filaments. As exemplary filaments, multifilaments, spun, folded and/or entangled filaments, which may consist of one or more organic materials (e.g. polymer fibers including aramides, polyamides, polypropylene fibers, polyester fibers, and polyethylene fibers), one or more inorganic materials (e. g. glass fibers, carbon fibers), or combinations thereof may be mentioned. The reinforcing fibers or reinforcing woven or non-woven material may be laminated to or directly incorporated into the constituent patch layers by suitable methods known to the skilled artisan. Also, the reinforcement material may be suitably positioned and orientated within the patch depending on the envisaged direction of stress.

In the configuration of Fig. 1B, if the first layer comprises a polymer, it may be further preferred that the second layer comprises a mixture of the materials constituting the first layer and the pressure-sensitive adhesive layer. For example, it may be preferred that the second layer consists of a mixture of the first layer material and the PSA layer material at a volume ratio of 10:90 to 95:5, more preferably 50:50 to 90:10, especially preferably 60:40 to 85:15. This configuration is particularly preferred when using a thermoplastic elastomer in the first layer, since it further improves the compatibility between the first layer and the PSA layer (thereby preventing delamination) and reduces migration of resin out of the adhesive layer which may result in loss of adhesion upon aging. In addition, the second layer can then be easily formed by recycling of discarded sheet material after die-cutting of sheet material, for example by co-extrusion of the discarded material. In such configurations, it may be preferable that the patch consists of the first layer, the second layer and the PSA layer, optionally with a release liner being provided on at least a part of the surface of the PSA layer.

A particularly preferred embodiment of the multilayer patch according to the first embodiment has a three-layer configuration comprising a first layer, a PSA layer, a second layer between and in contact with the first layer and the PSA layer, and an optional release liner; wherein the first layer comprises styrene-ethylene/butylene-styrene (SEBS) at a content of 5 to 30% by weight, an elastomer at a content of 5 to 15% by weight, a filler at a content of 60 to 90% by weight, and an optional colorant at a content of 0 to 5% by weight, each based on the total weight of the first layer; wherein the PSA layer comprises a mixture of: a styrene-based triblock copolymer selected from styrene-butadiene-styrene (SBS) or styrene-ethylene/butylene-styrene (SEBS), a styrene-based diblock copolymer, the total content of the styrene-based triblock copolymer and a styrene-based diblock copolymer being in the range of 30 to 60% by weight based on the total weight of the PSA layer, a hydrocarbon resin at a content in the range of 10 to 45% by weight and a filler at a content of 10 to 38% by weight, each based on the total weight of the PSA layer. Adhesive hole cover comprising said configuration enable effective sealing, exhibit remarkable damping properties (which may be easily varied by selection of the first layer thickness), excellent chemical resistance, temperature resistance, adhesive properties (both on oily or non-oily metal surfaces and on coated metal surfaces) and mechanical properties (i.e. balance of flexibility and structural strength), which may be produced in a simple and inexpensive manner since the same equipment may be used for the preparation of each layer, and which may be fully recycled, contrary to adhesive hole cover patches known in the art.

### Method of Sealing Vehicle Body Holes

In a second embodiment, the present invention relates to a method of sealing one or more automotive body hole(s) against ingression of noise, moisture and/or dirt, the method comprising applying the multilayered patch according to the first embodiment over the one or more automotive body hole(s).

Although the PSA layer employed in the multilayered patch enables firm adhesion to both coated and uncoated surfaces, it is preferred that the multilayered patch is applied over the one or more automotive body hole(s) before a final painting step, for example after e-coating of a vehicle body.

Overall, it will be appreciated that the preferred features of the first and second embodiments may be combined in any combination, except for combinations where at least some of the features are mutually exclusive.

The multilayered patch may be applied over the one or more automotive body hole(s) manually or in an automated manner.

As has been pointed out above, the PSA layer employed in the multilayered patch generally exhibits a low initial tack. Thus, compared to known sealing methods, especially the manual application is significantly facilitated, since the present method allows the patch to be easily repositioned, but nevertheless builds up strong adhesion quickly enough for other processes to follow directly after application.

A preferred embodiment of the method according to the second embodiment may involve automatically applying the multilayered patch according to the first embodiment over a vehicle body opening using a freely programmable industrial robot provided with an application tool, wherein a release liner, if present, is removed from the multilayered patch to expose the PSA layer, the multilayered patch is guided, positioned and/or stretched by means of a first adjustable holding-down device and a second adjustable holding-down device of the application tool, wherein the first holding-down device exerts tensile forces on the multilayered patch transversely to an application direction, and the second segmented holding-down device exerts tensile forces on the multilayered patch along the application direction. An exemplary automated application method is disclosed in DE 10 2009014186 A1.

### Method of Manufacturing Multilayered Patches

A third embodiment of the present invention relates to a method of manufacturing a multilayered patch according to the first embodiment.

While not being limited thereto, the method may generally comprise the steps of: extruding the pressure-sensitive layer; and laminating or extrusion-coating the extruded pressure-sensitive layer adhesive composition onto a film comprising the first layer and the optional second layer to produce the multilayered patch; or extruding the pressure-sensitive composition, forming a film of the extruded pressure-sensitive composition, and laminating the film over the first layer (or the second layer, if present) to produce the multilayered patch.

If the first layer comprises or is composed of a metal or metal alloy, the method generally comprises steps of extruding the pressure-sensitive layer; and extrusion-coating or laminating (by application of pressure at elevated temperatures, for example) the extruded pressure-sensitive layer onto the first layer (or the second layer, if present) to produce the multilayered patch.

If a first layer comprising a polymer and having a strain at break according to ASTM D638 of at least 10% is used, the method preferably comprises the steps of: independently extruding the first layer, the pressure-sensitive layer, and, if present, the second layer; and passing the extruded first layer and, if present, the extruded second layer, simultaneously through a first die (e.g., a coat-hanger die) to produce a film; coating the film with the pressure-sensitive adhesive by an extrusion coating method to produce the multilayered patch. Extrusion coating may be performed by methods known in the art and usually involves extruding the pressure-sensitive adhesive composition (e.g., by using single screw or twin screw extruders) from a die at elevated temperatures directly onto the (optionally moving) substrate (i.e. the first layer or, if present, the second layer) which may then be passed through a nip consisting of a pressure roller and a cooling roll, for example. The coating thickness may be suitably adjusted by variation of the speed ratio and/or the slot gap. An alternatively preferred method from the viewpoint of equipment costs and simplicity comprises the steps of: independently extruding the first layer, the pressure-sensitive layer, and, if present, the second layer; and passing the extruded first layer and, if present, the extruded second layer, simultaneously through a first die to produce a film; and passing the film and the extruded pressure-sensitive layer simultaneously through a second die to produce the multilayered patch. Extrusion may be generally brought about by suitable methods known in the art, e.g., by using single screw or twin screw extruders.

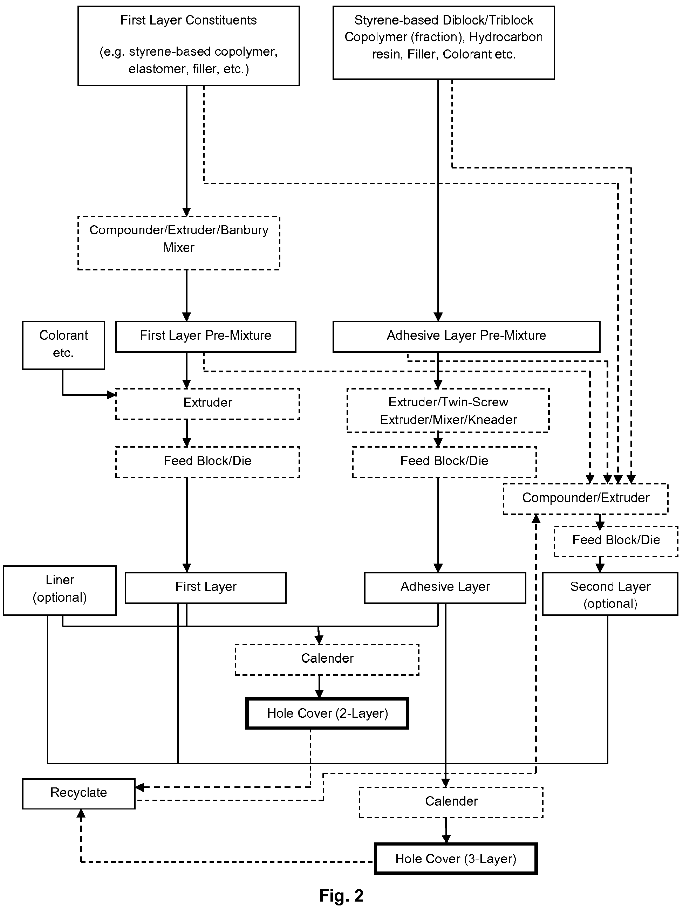

An exemplary production method of the present invention is illustrated in Fig. 2.

The method for the preparation of a PSA in accordance with the present invention is not particularly limited and may be brought about by mixing the styrene-based triblock copolymer, the styrene-based diblock copolymer, and the hydrocarbon resin (and optional additives) according to techniques known in the art, incl. mixing in a batch mixer, kneading and/or mixing by an extrusion method. The thus obtained mixture may be passed through a flat die to provide the pressure-sensitive adhesive layer, which is then laminated or extrusion-coated onto the first layer or, if present, the second layer. The lamination or extrusion coating step is preferably brought about at elevated temperatures. Specifically, in order to achieve firm bonding between the layers with especially high delamination resistance, it may be preferred that during lamination or extrusion coating, the pressure-sensitive adhesive (extrudate or layer) has a temperature in the range of 150 to 200°C, further preferably 160 to 190°C, and the surface temperature of the substrate (i.e. the first layer or, if present, the second layer) is between 80 to 170°C, further preferably 100 to 160°C, ideally between 120 and 140°C.

In a preferred embodiment, the polymer comprised in the first layer is a thermoplastic elastomer, which enables processing of the PSA layer and the first layer with the same equipment (e.g., the same extrusion technology), which remarkably simplifies patch manufacturing and reduces the production costs.

Independently, or in combination therewith, it may be preferred that the second layer is produced by: extruding a recyclate of the film comprising the first layer, the pressure-sensitive adhesive layer and, if present, the second layer; or co-extruding a recyclate of the film comprising the first layer, the pressure-sensitive adhesive layer and if present, the second layer, with one or more of: an adhesive layer composition comprising an extruded mixture of the styrene-based triblock copolymer, the styrene-based diblock copolymer, and the hydrocarbon resin; a first layer composition comprising an extruded mixture of the first layer constituents; and the styrene based triblock copolymer; and passing the (co-)extrudate through a die. Herein, the co-extrusion components and their contents may be suitably selected by the skilled artisan depending on the desired second layer composition. In an especially preferred embodiment, the method of producing the second layer comprises extruding a recyclate of the multilayered patch (e.g., preferably a patch comprising the first layer, the second layer and the pressure-sensitive adhesive layer), and passing the extrudate through a die, wherein additional amounts of the constituents of the first, second and PSA layers are optionally added during or before the extrusion step. Advantageously, said process directly implements a recycling procedure, and may also be carried out in an automated or semi-automated manner, e.g. by an inline rotary conversion system of scrap material to the second layer material.

A release liner may be provided on the PSA layer on the surface opposed to the first layer by passing the liner together with the film through the flat die, e.g. by using multiple roll calendars, wherein the release liner and the film are wound onto rolls according to the desired configuration. In order to achieve advantageously flat surfaces, it is preferable to heat-laminate the liner and the adhesive layer at temperatures of from 95 to 200°C, preferably of from 100 to 190°C with a heat roll.

In view of the above, the third embodiment according to the present invention provides an environment-friendly, simple and inexpensive method for manufacturing adhesive hole covers with excellent sound blocking profile, chemical resistance, temperature resistance, and/or mechanical properties.

It will be understood that the preferred features of the first embodiment may be combined with the methods of the third embodiment in any combination, except for combinations where at least some of the features are mutually exclusive.

Once given the above disclosure, many other features, modifications, and improvements will become apparent to the skilled artisan.

## Claims

1. Multilayered patch, comprising:
a first layer, and
a pressure-sensitive adhesive layer comprising a mixture of: a styrene-based triblock copolymer, a styrene-based diblock copolymer, and at least one hydrocarbon resin selected from the group of aromatic modified aliphatic hydrocarbon resins, partially hydrogenated resins, and fully hydrogenated resins;
wherein the first layer comprises a metal or a metal alloy, or wherein the first layer comprises a polymer and has a strain at break according to ASTM D638 of at least 10%.

2. The multilayered patch according to claim 1, wherein the styrene-based triblock copolymer is selected from styrene-butadiene-styrene (SBS), styrene-ethylene/butylene-styrene (SEBS) or styrene-isoprene-styrene (SIS), and/or wherein the styrene-based diblock copolymer is a styrene-butadiene diblock copolymer.

3. The multilayered patch according to any of claim 1 or 2, wherein the polymer comprised in the first layer is a thermoplastic elastomer.

4. The multilayered patch according to claim 3, wherein the thermoplastic elastomer is a styrene-based block copolymer different from the styrene-based triblock copolymer and styrene-based diblock copolymer used in the pressure-sensitive adhesive layer.

5. The multilayered patch according to any of claims 3 or 4, wherein the thermoplastic elastomer is styrene-ethylene/butylene-styrene (SEBS) or styrene-butadiene-styrene (SBS).

6. The multilayered patch according to any of claims 3 to 5, wherein the first layer further comprises an elastomer and an optional coloring agent.

7. The multilayered patch according to any of claims 3 to 6, wherein the first layer further comprises a filler.

8. The multilayered patch according to claim 7, wherein the first layer comprises the filler at a content of more than 50 wt.-%, based on the total weight of the first layer.

9. The multilayered patch according to any of claims 7 or 8, wherein the filler is BaSO₄.

10. The multilayered patch according to any of claims 1 to 9, further comprising a second layer between the first layer and the pressure-sensitive adhesive layer.

11. The multilayered patch according to claim 10, wherein the second layer comprises a mixture of the materials constituting the first layer and the pressure-sensitive adhesive layer.

12. Method of sealing one or more automotive body hole(s) against ingression of noise, moisture and/or dirt, the method comprising applying if the multilayered patch according to any of claims 1 to 11 over the one or more automotive body hole(s).

13. Method of sealing one or more automotive body hole(s) according to claim 12, wherein the multilayered sound-blocking patch is applied over the one or more automotive body hole(s) before a final painting step.

14. Method of manufacturing a multilayered patch comprising: a first layer, an optional second layer, and a pressure-sensitive adhesive layer comprising a mixture of a styrene-based triblock copolymer, a styrene-based diblock copolymer, and at least one hydrocarbon resin selected from the group of aromatic modified aliphatic hydrocarbon resins, partially hydrogenated resins, and fully hydrogenated resins; wherein the first layer comprises a metal or a metal alloy, or wherein the first layer comprises a polymer and has a strain at break according to ASTM D638 of at least 10%; the method comprising:
extrusion-coating the extruded pressure-sensitive adhesive composition onto a film comprising the first layer and the optional second layer to produce the multilayered patch; or
extruding the pressure-sensitive composition, forming a film of the extruded pressure-sensitive composition, and laminating the film over the first layer or optional second layer to produce the multilayered patch.

15. Method of manufacturing a multilayered patch according to claim 14, wherein the first layer comprises a polymer and has a strain at break according to ASTM D638 of at least 10%; the method further comprising:
independently extruding the first layer and, if present, the second layer;
passing the extruded first layer and, if present, the extruded second layer, simultaneously through a first die to produce a film; and
coating the film with the pressure-sensitive adhesive by an extrusion coating method to produce the multilayered patch; or
extruding the pressure-sensitive composition, forming a film of the extruded pressure-sensitive composition, and laminating the film over the first layer or optional second layer to produce the multilayered patch.
